# EUROPÄISCHE PATENTSCHRIFT

(11) **EP 0 637 708 B1**
(45) Veröffentlichungstag und Bekanntmachung des Hinweises auf die Patenterteilung: **22.04.1998**
(21) Anmeldenummer: 94109948.3
(22) Anmeldetag: 28.06.1994
(51) Int. Cl.: F16K 11/07, F16K 27/04

(54) **Mehrwegeventil, insbesondere zur Steuerung pneumatischer Motoren**
Multiportvalve, particularly for control of pneumatic motors
Distributeur à plusieurs voies particulièrement pour commande des moteurs pneumatiques

(30) Priorität: 21.07.1993 DE 4324465
(43) Veröffentlichungstag der Anmeldung: 08.02.1995
(73) Patentinhaber: ROBERT BOSCH GMBH, 70442 Stuttgart (DE)
(72) Erfinder: Spalt, Wolfgang, D-70559 Stuttgart (DE)

(56) Entgegenhaltungen:
- EP-A- 0 103 564
- DE-A- 2 308 191
- DE-A- 3 114 129
- DE-A- 3 408 182
- DE-A- 3 641 383

## Beschreibung

### Stand der Technik

Die Erfindung geht aus von einem Mehrwegeventil zur Steuerung pneumatischer Motoren nach der im Oberbegriff des Anspruchs 1 näher angegebenen Gattung.

Es ist schon ein solches Mehrwegeventil aus der DE 36 41 383 Al bekannt, das als 5/2-Ventil ausgebildet ist und im wesentlichen ein einteiliges Gehäuse aufweist. Dieses Gehäuse weist seitlich von außen zugängliche Einschubschlitze auf, in welche Dichtungselemente eingeschoben werden, so daß sie axial unverschieblich gehalten sind. Im Inneren des Gehäuses ist in diesen Dichtungselementen der Steuerschieber gelagert, dessen Kolbenabschnitte mit den Dichtungselementen zur Steuerung der Druckmittelverbindungen dichtend zusammenarbeiten. Nachteilig bei diesem Mehrwegeventil ist nun, daß es sehr aufwendige, speziell ausgebildete Dichtungselemente verwendet, welche die Steuerkammern untereinander und nach außen hin abdichten müssen. Die Dichtungselemente haben einen tragenden, metallischen Kern, auf den als elastische Dichtungsmasse ein Gummi aufvulkanisiert ist. Diese mehrschichtige Bauweise der Dichtungselemente ist erforderlich, da die Dichtungselemente selbst unmittelbar die Steuerkammern begrenzen und derem Druck ausgesetzt sind. Das Mehrwegeventil baut deshalb relativ teuer, zumal es keine handelsüblichen Dichtringe verwenden kann; vor allem läßt sich das Gehäuse infolge der speziellen Dichtringe nicht kostengünstig herstellen, zumal es eine spanende Bearbeitung erfordert. Ferner führt die Vielzahl von Dichtelementen zu radialem Versatz und damit zu erhöhter Reibung und Verschleiß.

Ferner ist aus der EP 0 103 564 A2 ein Mehrwegeventil bekannt, bei dem das den Steuerschieber aufnehmende Gehäuse aus mehreren gleichartigen Gehäuseabschnitten aus Kunststoff zusammengesetzt wird, die anschließend durch zwei metallische Längsschienen zusammengehalten werden. Dabei ist je Anschluß ein Gehäuseabschnitt vorgesehen, an dem zum benachbarten Gehäuseabschnitt hin jeweils eine Ringdichtung eingebaut ist, die mit dem Steuerschieber zusammenwirkt. Die Abdichtung zu den einzelnen Anschlüssen in den metallischen Längsschienen übernehmen O-Ringe. Durch eine um 180° verdrehte Montage der einzelnen Gehäuseabschnitte werden dabei die Anschlüsse des 5/2-Mehrwegeventils an entgegengesetzten Seiten des Gehäuses herausgeführt. Obwohl diese Modulbauweise des Gehäuses vielseitige Anwendungsmöglichkeiten eröffnet, hat dieses Mehrwegeventil doch den Nachteil, daß sein vielgliedriges Gehäuse insgesamt zu einer aufwendigen Bauart führt, die vor allem eine teure Montage und Wartung mit sich bringt. Auch läßt sich hier ein Mehrwegeventil für Plattenanschluß schlecht realisieren, bei dem alle Anschlüsse auf der gleichen Seite des Gehäuses herausgeführt werden. Die Vielzahl der Bauelemente führt zu radialem Versatz und zur Addition axialer Einzeltoleranzen.

### Vorteile der Erfindung

Das erfindungsgemäße Mehrwegeventil mit den kennzeichnenden Merkmalen des Hauptanspruchs hat demgegenüber den Vorteil, daß es auf einfache und kostengünstige Weise eine sichere Abdichtung der Steuerräume ermöglicht und verbesserte Bedingungen für die Montage und die Wartung erzielbar sind. Das Mehrwegeventil kommt mit wenig Gehäuseteilen, im wesentlichen zwei, aus und verwendet einfache, ggf. handelsübliche Dichtungen, wobei sich optimale Dichtfunktionen erreichen lassen. Die mit dem Steuerschieber zusammenarbeitenden Ringdichtungen werden in besonders einfacher Weise in axialer Richtung, also wie der Steuerschieber, in das Gehäuse eingebaut. Das Mehrwegeventil eignet sich daher besonders für eine weitgehend automatisierte Herstellung, wobei die Montage der beiden Gehäuseteile verhältnismäßig einfach durchführbar ist. Zudem lassen sich die beiden Gehäuseteile besonders preiswert aus Kunststoff herstellen.

Die beiden ineinandergsteckten Gehäuseteile haben für die Positionen der Schieberdichtungen keine wesentlichen Toleranzen. In axialer Richtung fallen die Addition der Einzeltoleranzen von Bauelementen (Reihenschaltung) weg.

Dadurch hat man eine genaue Position der Schieberdichtungen und somit gegebenenfalls eine höhere Durchflußleistung. Ferner lassen sich genaue Positionen der Schieberdichtungen wie bei außengedichteten Schiebern mit aufwendiger Gehäusebohrung erreichen. In radialer Richtung sitzen alle Dichtungen in einer Bohrung, so daß kaum Versatz auftritt.

Durch die in den Unteransprüchen aufgeführten Maßnahmen sind vorteilhafte Weiterbildungen und Verbesserungen des im Anspruch 1 angegebenen Mehrwegeventils möglich. Besonders vorteilhaft ist eine Ausbildung, wenn die Steuerkammern unmittelbar in den Halterstegen des Dichtungshalters ausgebildet werden. Dadurch wird eine günstig herstellbare und kompakte Bauweise unterstützt. Äußerst zweckmäßig ist es, wenn gemäß den Ansprüchen 3 und 4 die Steuerkammern nach außen hin durch Formdichtungen abgedichtet werden, wodurch sich mit billigen Bauelementen eine wirksame Abdichtung erzielen läßt und diese vor allem bei einer einstückigen Ausbildung der Formdichtung den Montageaufwand verringert. Eine äußerst vorteilhafte Bauweise ergibt sich, wenn die Ringdichtungen und die sie aufnehmenden Trägerstege im wesentlichen gleich dick ausgeführt werden, wodurch bei kompakter Bauweise optimale Funktionen der Ringdichtungen erzielbar sind. Eine preisgünstige Bauweise und eine einfache Montage werden begünstigt durch Ausführungen nach den Ansprüchen 6 und 7, so daß auch Wartungsarbeiten an dem Mehrwegeventil vorteilhaft durchführbar sind. Weitere zweckmäßige Ausgestaltungen ergeben sich aus den übrigen Ansprüchen, die nicht nur eine kostengünstige Bauweise mit hoher Lebensdauer ermöglichen, sondern auch eine einfache Herstellung, Montage und Wartung begünstigen. Weitere vorteilhafte Ausgestaltungen ergeben sich aus der Beschreibung sowie der Zeichnung.

### Zeichnung

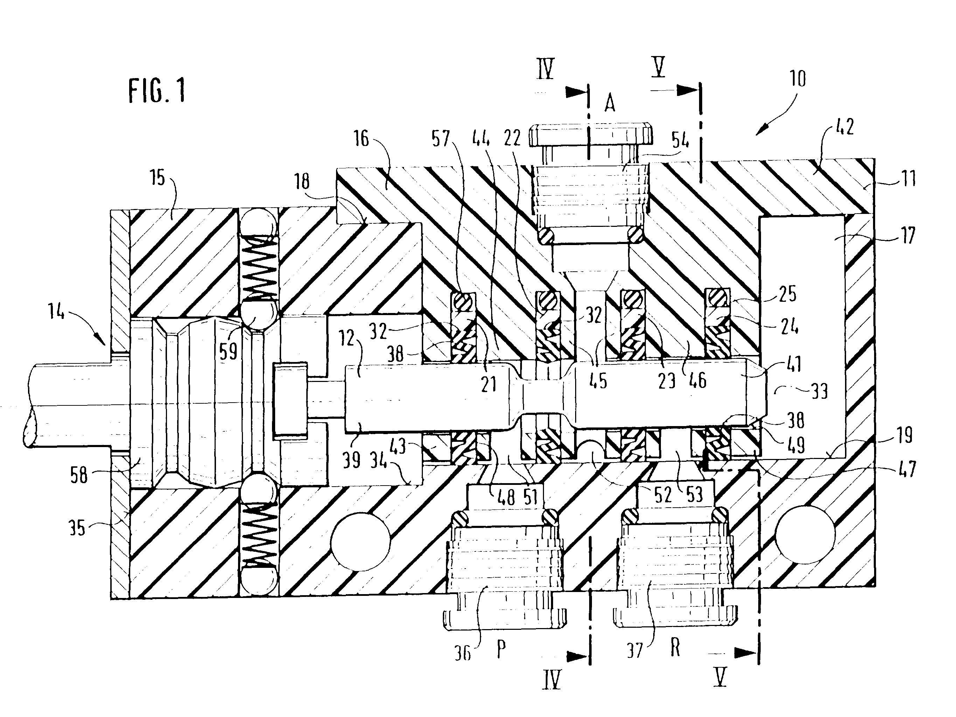

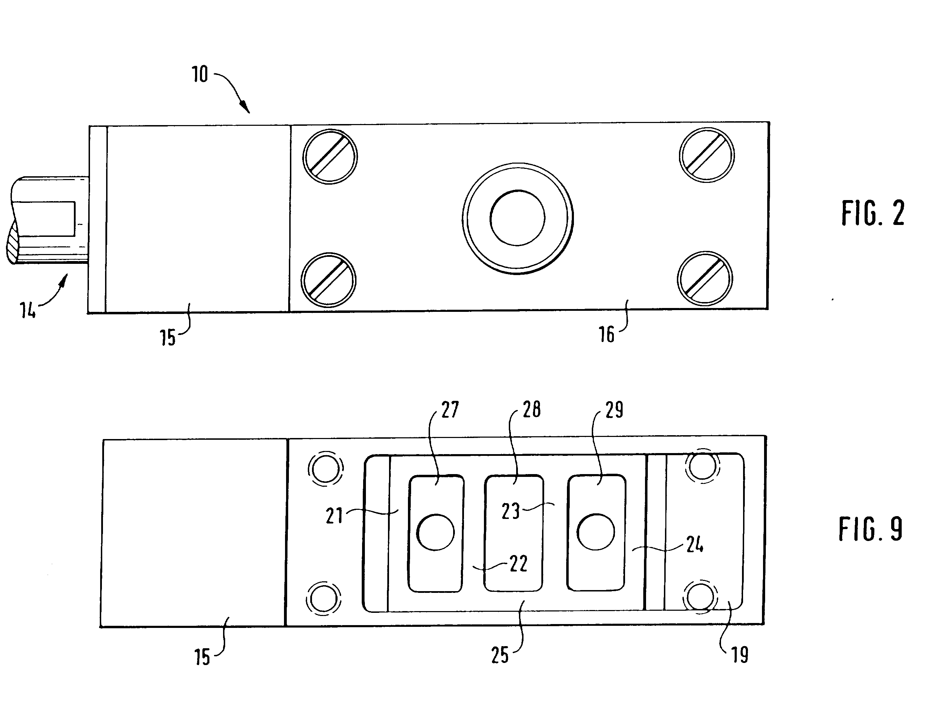

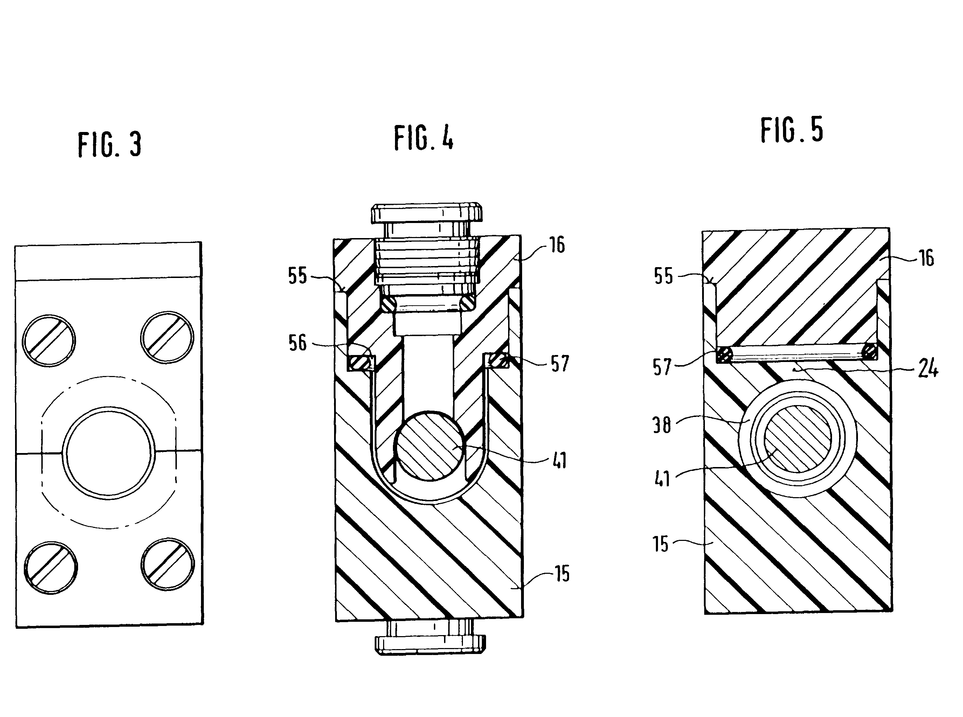

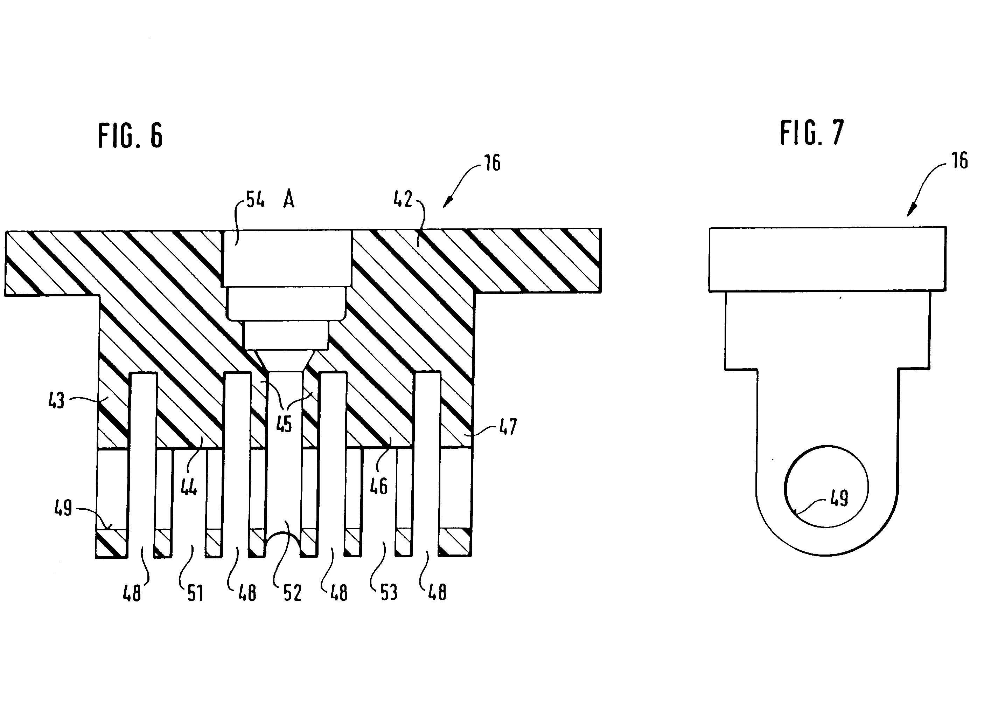

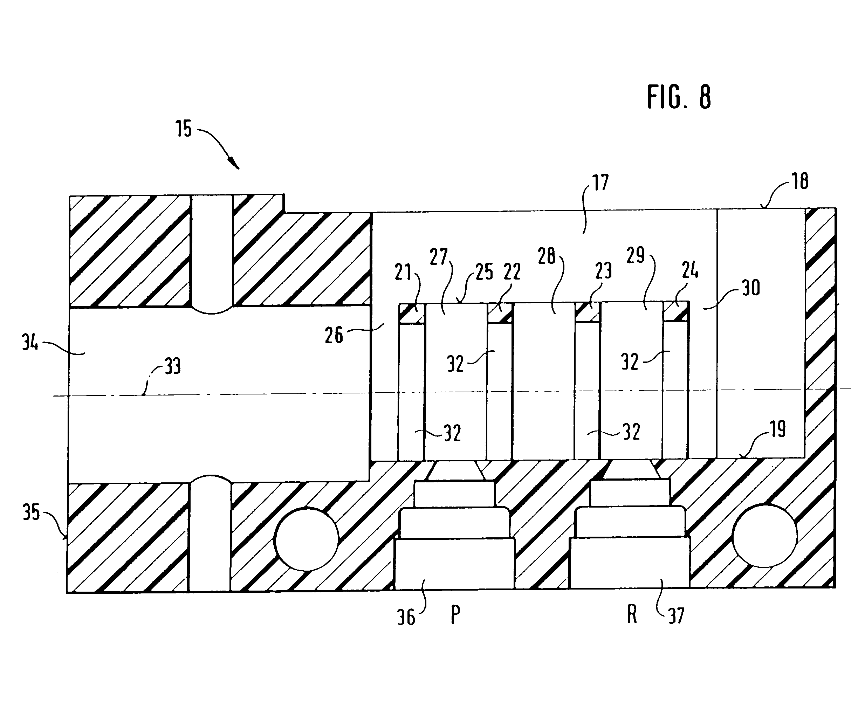

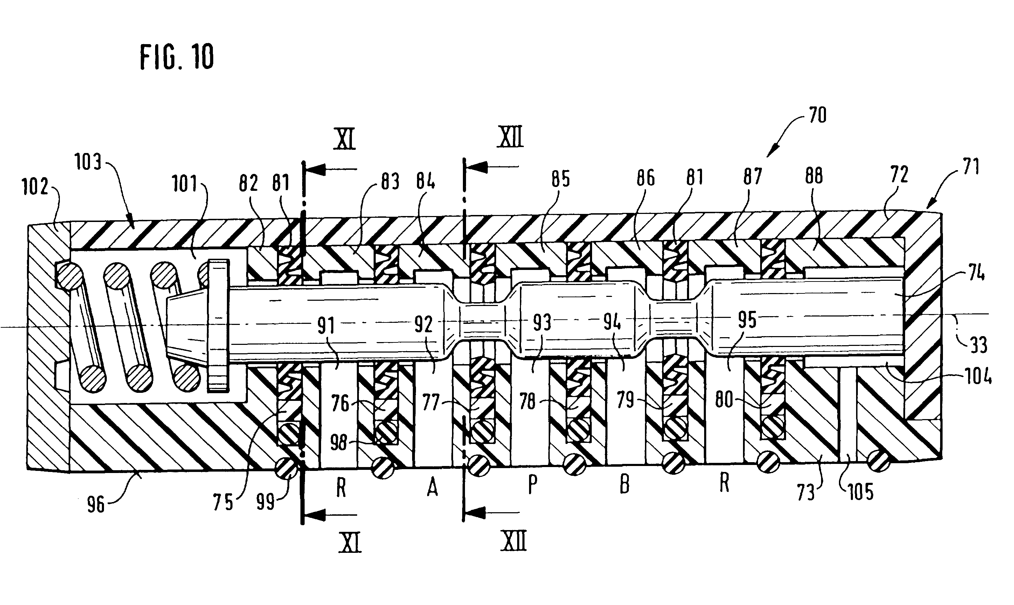

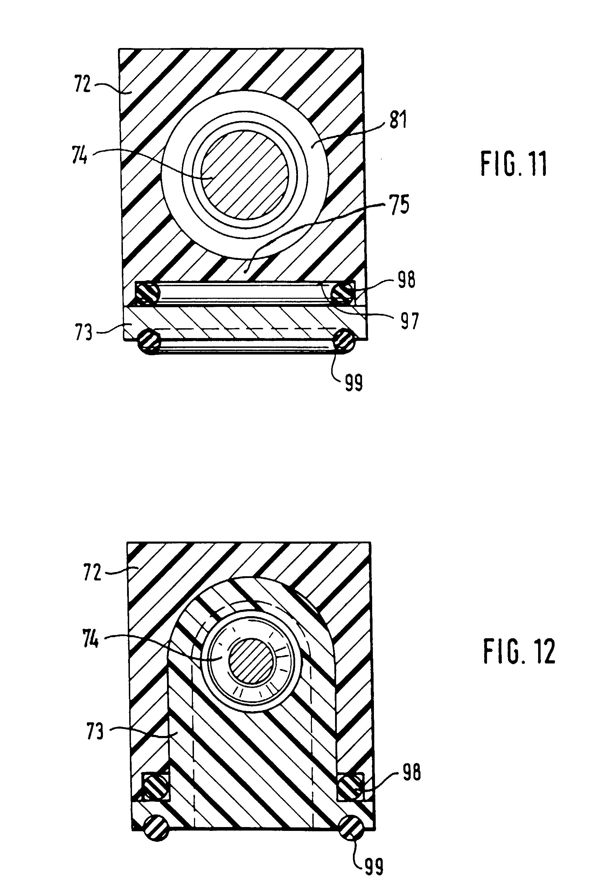

Zwei Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel eines Mehrwegeventils in vereinfachter Darstellung, Figur 2 eine Draufsicht auf das Mehrwegeventil nach Figur 1, Figur 3 eine Seitenansicht des Mehrwegeventils nach Figur 1, Figur 4 und 5 jeweils einen Längsschnitt nach Linie IV-IV bzw. V-V in Figur 1, Figur 6 einen Längsschnitt durch ein einzelnes Gehäuseteils des Mehrwegeventils nach Figur 1, nämlich den Dichtungshalter, Figur 7 eine Seitenansicht des Dichtungshalters nach Figur 6, Figur 8 einen Längsschnitt durch das andere Gehäuseteil des Mehrwegeventils, den Dichtungsträger und Figur 9 eine teilweise Draufsicht auf den Dichtungsträger nach Figur 8; die Figur 10 zeigt einen Längsschnitt durch ein zweites Ausführungsbeispiel des Mehrwegeventils in vereinfachter Darstellung, und die Figuren 11 und 12 jeweils einen Querschnitt nach XI-XI bzw. XII-XII in Figur 10.

### Beschreibung der Ausführungsbeispiele

Die Figur 1 zeigt im Längsschnitt und in vereinfachter Darstellung ein erstes Mehrwegeventil 10, das als 3/2-Ventil für Rohranschluß ausgebildet ist und im wesentlichen aus einem Gehäuse 11, einem längsbeweglichen Steuerschieber 12, mit dem Steuerschieber 12 zusammenwirkenden Ringdichtungen und einer Hand-Betätigungseinrichtung 14 zum Bedienen des Steuerschiebers 12 besteht.

Das Gehäuse 11 des Mehrwegeventils 10 ist im wesentlichen 2-teilig ausgebildet, dessen in Figur 1 untenliegendes Gehäuseteil als Dichtungsträger 15 bezeichnet wird, während das obere Gehäuseteil, das in den Dichtungsträger 15 eingesteckt wird, als Dichtungshalter 16 benannt ist. Der Dichtungsträger 15 ist als Einzelteil noch näher in den Figuren 8 und 9 dargestellt, während die Figuren 6 und 7 in entsprechender Weise den Dichtungshalter allein zeigen.

Wie aus Figur 1 insbesondere in Verbindung mit den Figuren 8 und 9 hervorgeht, weist der Dichtungsträger 15 im wesentlichen einen quaderförmigen Grundkörper auf, in dem ein trogförmiger Innenraum 17 ausgebildet ist, der nach oben zu einer Montagefläche 18 hin offen ist. Vom Boden 19 dieses Innenraums 17 ragen vier zueinander parallele Trägerstege 21 bis 24 senkrecht in den Innenraum 17 hinein und bilden gemeinsam eine Dichtungsebene 25. Durch die vier Trägerstege, die sich zwischen den beiden Längswänden des quaderförmigen Grundkörpers erstrecken, wird der Innenraum 17 in fünf taschenförmige Ausnehmungen 26 bis 30 unterteilt. Jeder Trägersteg 21 bis 24 weist eine kreisrunde Bohrung 32 auf, die alle gleichen Durchmesser haben und koaxial zu einer Längsachse 33 liegen. Die Mantelfläche dieser Bohrungen 32 tangiert den Boden 19 des Innenraums 17. Die erste Ausnehmung 26 neben dem Trägersteg 21 ist über eine Längsbohrung 34 zur Stirnseite 35 des Dichtungsträgers 15 hin offen. Diese Längsbohrung 34 liegt ebenfalls koaxial zur Längsachse 33 und ist im Durchmesser größer als die Bohrung 32 in den Trägerstegen 21 bis 24. Vom Boden der taschenförmigen Ausnehmung 27 zwischen den Trägerstegen 21, 22 führt ein Durchgang zu einem ersten Anschluß 36 für den Zulauf P. Ferner führt von der vierten Ausnehmung 29 am Boden 19 ein Durchgang zu einem zweiten Anschluß 37 für den Rücklauf R. Wie aus Figur 8 insbesondere in Verbindung mit Figur 4 erkennbar ist, verlaufen die taschenförmigen Ausnehmungen 26 bis 30 ausgehend von der Dichtungsebene 25 in parallelen, ebenen Seitenwänden nach unten, bis sie in Höhe einer Ebene durch die Längsachse 33 in ein Ende mit halbkreisförmigem Querschnitt übergehen.

Wie Figur 1 näher zeigt, sind in die Bohrungen 32 der vier Trägerstege 21 bis 24 jeweils eine Ringdichtung 38 eingesetzt, die untereinander gleich ausgebildet sind und somit gleiche Außen- und Innendurchmesser aufweisen. An ihrem Außendurchmesser liegen diese Ringdichtungen 38 dicht an den Wänden der Bohrungen 32 an, so daß die taschenförmigen Ausnehmungen 27, 28, 29 voneinander getrennt sind. Dabei ist es zweckmäßig, daß die Ringdichtungen 38 mit Vorspannung eingesetzt werden, so daß sie ihre Positionen beibehalten. Mit ihrem Innendurchmesser arbeiten die Ringdichtungen 38 mit den Kolbenabschnitten 39, 41 des Steuerschiebers 12 zusammen, um die gewünschten Druckmittelverbindungen herzustellen bzw. abzudichten. Die Ringdichtungen 38, welche in radialer Richtung von den Trägerstegen 21 bis 24 aufgenommen werden, haben in axialer Richtung im wesentlichen die gleiche Dicke wie die zugeordneten Trägerstege 21 bis 24.

Während die Ringdichtungen 38 durch den Dichtungsträger 15 in radialer Richtung fixiert sind, werden die Ringdichtungen 38 in axialer Richtung nach beiden Seiten hin durch den kammartig ausgebildeten Dichtungshalter 16 fixiert. Wie die Figur 1 insbesondere in Verbindung mit Figur 6 und 7 näher zeigt, weist der Dichtungshalter 16 von einem plattenartigen Deckelteil 42 ausgehend fünf zueinander parallel verlaufende, eine gleiche Außenkontur aufweisende Halterstege 43 bis 47 auf, die zwischen sich vier Schlitze 48 ausbilden, in welche die Trägerstege 21 bis 24 passend einsteckbar sind. Sämtliche Halterstege 43 bis 47 sind von einer Schieberbohrung 49 durchdrungen, deren Längsachse bei montiertem Dichtungshalter 16 in der Längsachse 33 des Dichtungsträgers 15 liegt. Der Durchmesser der Schieberbohrung 49 ist nur geringfügig größer als der Außendurchmesser des Steuerschiebers 12, so daß der Dichtungsspalt gering ist. Bei in dem Dichtungsträger 15 eingebautem Dichtungshalter 16 dienen somit jeweils zwei der Halterstege 43 bis 47 als seitliche Halterungen für die insgesamt vier Ringdichtungen 38, die sich somit mit ihren vollen Seitenflächen am Dichtungshalter 16 abstützen können. Wie Figur 6 ferner näher zeigt, weisen von den fünf Halterstegen 43 bis 47 die drei innenliegenden Halterstege 44 bis 46 jeweils mittig angeordnete Steuerkammern 51, 52, 53 auf, welche ebenfalls von der Schieberbohrung 49 voll durchdrungen werden und welche nach unten - bezogen auf Figur 6 - hin offen sind. Die im mittleren Haltersteg 45 angeordnete Steuerkammer 52 steht zusätzlich mit einem Anschluß 54 für den Motor A in Verbindung, wobei dieser Anschluß 54 oben im Deckelteil 42 angeordnet ist. Wie insbesondere die Figur 7 in Verbindung mit Figur 4 näher zeigt, weisen die Halterstege 43 bis 47 eine untereinander gleiche Außenkontur auf, deren Außenform den taschenförmigen Ausnehmungen 26 bis 30 entsprechend angepaßt ist. Wie aus Figur 1 in Verbindung mit Figur 4 und 5 näher hervorgeht, sitzt der in dem Dichtungsträger 15 eingebaute Dichtungshalter 16 mit seinem Deckelteil 42 an einem Absatz 55 im Dichtungsträger 15 auf, welcher von der Montagefläche 18 gebildet wird. Zudem wird der Dichtungshalter 16 in Querrichtung durch die den Innenraum 17 begrenzenden Seitenwände geführt. Bei eingebautem Dichtungshalter 16 verbleibt zwischen Dichtungsträger 15 und Dichtungshalter 16 in Höhe der Dichtungsebene 25 ein Dichtungsspalt 56, in dem eine Formdichtung 57 angeordnet ist. Die auf der Dichtungsebene 25 aufliegende, einstückige Formdichtung 57 besteht im wesentlichen aus drei kammernden Ringen, welche jeweils in dem Grund der vier Schlitze 48 zu liegen kommen und somit die mittleren Halterstege 44, 45 und 46 umringen. Auf diese Weise wird eine sichere Abdichtung der Steuerkammern 51 bis 53 nach außen hin erreicht.

Der Steuerschieber 12 ist durch die Hand-Betätigungseinrichtung 14 in seine zwei Arbeitsstellungen verstellbar, wozu einem in der Längsbohrung 34 angeordneten Rastkolben 58 entsprechende Rastmittel 59 zugeordnet sind.

Die Wirkungsweise des Mehrwegeventils 10 kann grundsätzlich als an sich bekannt vorausgesetzt werden, so daß nur so weit darauf eingegangen wird, als zum Verständnis der Erfindung erforderlich ist. Bei der in Figur 1 gezeigten Arbeitsstellung des Mehrwegeventils 10 ist der erste Anschluß 36 über den Steuerschieber hinweg mit dem dritten Anschluß 54 für den Motor A verbunden, während der zweite Anschluß 37 abgesperrt ist. Die Abdichtung der mit dem ersten Anschluß 36 verbundenen ersten Steuerkammer 51 und der mit dem dritten Anschluß 54 verbundenen zweiten Steuerkammer 52 übernehmen dabei die beiden Ringdichtungen 38 in dem ersten Trägersteg 21 nach außen hin und in dem dritten Trägersteg 23 zur dritten Steuerkammer 53 hin. Zudem wird die Abdichtung dieser beiden Steuerkammern 51 und 52 zwischen den beiden Gehäuseteilen 15 und 16 durch die Formdichtung 57 nach außen hin übernommen. Zugleich ist auch die dritte Steuerkammer 53 für den Rücklaufanschluß 37 durch die beiden Ringdichtungen 38 in dem dritten und vierten Trägersteg 23, 24 sowie die Formdichtung 57 fluidisch abgesperrt. Bei einer Umschaltung des Steuerschiebers 12 in seine andere Endlage wirken die Ringdichtungen 38 sinngemäß umgekehrt.

Das Mehrwegeventil 10 ermöglicht neben einer relativ einfachen Bauweise eine kostengünstige Montage. Die beiden Gehäuseteile, nämlich Dichtungsträger 15 und Dichtungshalter 16 lassen sich aus Kunststoff günstig und paßgenau herstellen. Beim Zusammenbau des Mehrwegeventils 10 werden in dem Dichtungsträger 15 vor dem Einbau der Hand-Betätigungseinrichtung 14 durch die freie Längsbohrung 34 hindurch die vier gleich großen Ringdichtungen 38 in die vier Trägerstege 21 bis 24 nacheinander eingepreßt. Die Montage der Dichtungsringe 38 erfolgt somit in der gleichen Arbeitsebene wie diejenige des Steuerschiebers 12. Nach dem Einbau der Ringdichtungen 38 in den Dichtungsträger 15 wird in Richtung quer zur Längsachse des Steuerschiebers 12 der Dichtungshalter 16 in den Dichtungsträger 15 eingesetzt, wobei die Trägerstege 21 bis 24 kammartig zwischen die Halterstege 43 bis 47 des Dichtungshalters 16 greifen und damit eine optimale Halterung und Abstützung für die Ringdichtungen 38 ergeben. Vor dem Einstecken des Dichtungshalters 16 in den Innenraum 17 wird auf die Dichtungsebene 25 noch die Formdichtung 57 gelegt. Nach dem Zusammenbau von Dichtungsträger 15 und Dichtungshalter 16 kann der Steuerschieber 12 mit der Hand-Betätigungseinrichtung 14 montiert werden. Insgesamt ist eine relativ einfache Montage durchführbar, die leicht automatisierbar und daher kostengünstig ist.

Die Figur 10 zeigt einen Längsschnitt durch ein zweites Mehrwegeventil 70 in vereinfachter Darstellung, das sich von dem 3/2-Mehrwegeventil nach Figur 1 vor allem dadurch unterscheidet, daß es als 5/2-Ventil ausgebildet und für eine Plattenanschluß-Bauweise vorgesehen ist.

Das zweite Mehrwegventil 70 hat ein nach dem gleichen Prinzip wie das erste Mehrwegeventil 10 aufgebautes, zweiteiliges Gehäuse 71, mit einem Dichtungsträger 72 und einem zugeordneten Dichtungshalter 73. In dem Gehäuse 71 ist der Steuerschieber 74 dicht und gleitend geführt, wozu am Dichtungsträger 72 in kammartiger Weise sechs zueinander parallele Trägerstege 75 bis 80 ausgebildet sind, welche in ihren kreisrunden Ausnehmungen sechs untereinander gleich ausgebildete Ringdichtungen 81 tragen. Entsprechend den sechs Trägerstegen 75 bis 80 weist der Dichtungshalter 73 dazu passende sieben Halterstege 82 bis 88 auf, welche in die taschenförmigen Ausnehmungen des Dichtungsträgers 72 einsteckbar sind und dabei die Abstandshalterung für die Ringdichtungen 81 in axialer Richtung übernehmen. Von den fünf innenliegenden Halterstegen 83 bis 87 ist in jedem dieser Halterstege eine Steuerkammer 91 bis 95 mittig ausgebildet, welche mit den üblichen Anschlüssen R, A, P, B, R in einer Flanschfläche 96 in Verbindung stehen. Ferner liegt auf der von den Trägerstegen 75 bis 80 gebildeten Dichtungsebene 97 die Formdichtung 98 auf, welche die Abdichtung zwischen Dichtungsträger 72 und Dichtungshalter 73 übernimmt. Ferner ist in der ebenen Flanschfläche 96 ein zusätzliches, einstückiges Dichtungselement 99 angeordnet.

Entsprechend der Ausbildung des zweiten Mehrwegeventils 70 als 5/2-Ventil grenzt der erste, außenliegende Haltersteg 82 an einen Federraum 101, der durch einen Deckel 102 verschlossen ist und in seinem Inneren eine Rückstelleinrichtung 103 für den Steuerschieber 74 aufnimmt. In dem dazu entgegengesetzt liegenden siebten Haltersteg 88 ist ein Druckraum 104 ausgebildet, der mit einem Steueranschluß 105 in der Flanschfläche 96 in Verbindung steht.

Die Wirkungsweise des zweiten Mehrwegventils 70 kann an sich als bekannt vorausgesetzt werden. In der gezeichneten Stellung des Steuerschiebers 74 verbindet der längsbewegliche Kolbenschieber 74 die dritte Steuerkammer 93 mit der zweiten Steuerkammer 92, so daß der Zulaufanschluß P mit dem ersten Motoranschluß A Verbindung hat, während gleichzeitig der zweite Motoranschluß B mit dem zweiten Rücklaufanschluß 95 verbunden ist. Zum Umschalten des Wegeventils 70 wird über den Steueranschluß 105 der Druckraum 104 mit Steuerdruck beaufschlagt, so daß der Steuerschieber 74 gegen die Kraft der Rückstelleinrichtung 103 in seine andere Endstellung geschoben wird und dadurch die Verbindung der Anschlüsse nach P mit B und A mit R vertauscht werden. In entsprechender Weise wie beim ersten Mehrwegeventil 10 wird auch beim zweiten Mehrwegeventil 70 die Abdichtung zwischen den Steuerräumen 91 bis 95 sowie nach außen hin durch die Ringdichtungen 81 und die Formdichtung 98 übernommen.

Beim Mehrwegeventil 70 lassen sich Wartung und Montage ebenfalls in vorteilhafter Weise durchführen. So können im Dichtungsträger 72 die untereinander gleichen, sechs Ringdichtungen 81 in axialer Richtung in die Trägerstege 75 bis 80 eingebaut werden. Nach dem Einlegen der Formdichtung 98 in die zugehörigen Schlitze des Dichtungshalters 73 können Dichtungsträger 72 und Dichtungshalter 73 zusammengesteckt werden, wobei die Trägerstege und Halterstege kammartig ineinandergreifen. Anschließend läßt sich in einfacher Weise der Steuerschieber 74, die Rückstelleinrichtung 103 und der Deckel 102 montieren. Auch bei einer Bauweise als 5/2-Ventil lassen sich Dichtungsträger 72 und Dichtungshalter 73 in preisgünstiger Weise aus Kunststoff herstellen und erlauben eine einfache und schnelle Montage des Mehrwegeventils 70, wobei die Ringdichtungen 81 durch die Art und Weise ihrer Anordnung im Gehäuse 71 ihre Aufgabe optimal erfüllen können.

Selbstverständlich sind an den gezeigten Ausführungsformen Änderungen möglich, ohne vom Gedanken der Erfindung abzuweichen. So sind die Mehrwegeventile nicht auf die gezeigten Bauweisen als 3/2- und 5/2-Ventile begrenzt, sondern lassen sich an unterschiedliche Anwendungsfälle anpassen. Ebenso sind die Rohranschluß- bzw. die Plattenanschluß-Bauweise nur beispielhaft dargestellt. Die erfindungsgemäße Bauweise mit dem zweiteiligen Gehäuse läßt sich auch realisieren, wenn die Funktionen mehrerer Mehrwegeventile in einem Ventilblock zusammengefaßt werden. Zum Beispiel können dann in einem Blockgehäuse mehrere Dichtungsträger integriert werden, in den dann von außen entsprechend ausgestaltete Dichtungshalter einsteckbar sind. Obwohl die Bauweise der Ventile sich besonders für pneumatische Steuerungen eignet, ist sie auch für hydraulische Ventile geeignet.

## Patentansprüche

1. Mehrwegeventil, insbesondere zur Steuerung pneumatischer Motoren, mit einem in einem Gehäuse angeordneten, längsbeweglichen Steuerschieber (12;74), der insbesondere mittels Kolbenabschnitten die Druckmittel-Verbindung zwischen mindestens zwei nebeneinanderliegenden Steuerkammern (51-53;91-95) steuert, die jeweils mit Anschlüssen (36,37,54) verbunden sind und von denen jede durch zwei Dichtelemente in axialer Richtung voneinander getrennt bzw. nach außen hin abgedichtet sind, welche mit dem Steuerschieber zusammenarbeiten, der die Steuerkammern sowie die im Gehäuse eingebauten Dichtelemente durchdringt, dadurch gekennzeichnet, daß die Dichtelemente als Ringdichtungen (38; 81) ausgebildet sind und das Gehäuse (11; 71) einen Dichtungsträger (15; 72) und einen Dichtungshalter (16; 73) aufweist, von denen der Dichtungsträger (15, 72) mehrere von einer parallel zur Längsachse verlaufenden Seite ausgehende, senkrecht zum Steuerschieber (12; 74) verlaufende und letzteren umspannende Trägerstege (21-24; 75-80) aufweist, die kammartig angeordnet sind und in deren Bohrungen (32) die Ringdichtungen (38, 83) in Längsrichtung des Steuerschiebers (12; 74) eingebaut sind, daß der Dichtungshalter (16; 73) ebenfalls an einer Seite kammartig angeordnete, senkrecht zum Steuerschieber (12; 74) verlaufende und diesen umspannende Halterstege (43-47; 82-88) aufweist und daß der Dichtungsträger (15; 72) und der Dichtungshalter (16; 73) so ausgebildet sind, daß sie mit ineinander kämmenden Stegen (21-24; 43-47) so zusammensteckbar sind, daß jede in einem Trägersteg (21-24; 75-80) in radialer Richtung fixierte Ringdichtung (38; 81) in axialer Richtung durch Halterstege (43-47; 82-88) gehalten ist.

2. Mehrwegeventil nach Anspruch 1, dadurch gekennzeichnet, daß die Steuerkammern (51-53; 91-95) in den Halterstegen (44-46; 83-87) des Dichtungshalters (16; 73) ausgebildet sind und insbesondere nach einer Seite des Dichtungshalters (16;73) hin offen sind.

3. Mehrwegeventil nach Anspruch 1 oder 2, dadurch gekennzeichnet, daß jede Steuerkammer (51-53; 91-95) durch eine zwischen Dichtungsträger (15; 72) und Dichtungshalter (16; 73) angeordnete Formdichtung (57; 98) nach außen hin abgedichtet ist, wobei die Formdichtung (57; 98) im radialen Abstand zum Steuerschieber (12; 74) liegt und jeden Haltersteg (44-46) mit Steuerkammer (51-53) ringförmig kammernd umspannt.

4. Mehrwegeventil nach Anspruch 3, dadurch gekennzeichnet, daß die Formdichtungen (57; 98) für mehrere Steuerkammern (51-53; 91-95) einstückig ausgebildet sind und in einer Dichtungsebene (25; 97) liegen.

5. Mehrwegeventil nach einem oder mehreren der Ansprüche 1 bis 4, dadurch gekennzeichnet, daß die Ringdichtungen (38; 81) in Längsrichtung des Steuerschiebers (12; 74) gesehen im wesentlichen gleich dick sind, wie die sie aufnehmenden Trägerstege (21-24; 75-80).

6. Mehrwegeventil nach einem der Ansprüche 1 bis 5, dadurch gekennzeichnet, daß alle Ringdichtungen (38; 81) gleiche Innen- und gleiche Außen-Durchmesser aufweisen.

7. Mehrwegeventil nach einem der Ansprüche 1 bis 6, dadurch gekennzeichnet, daß der Dichtungsträger (15; 72) wenigstens eine Stirnseite (35) aufweist, von der her die kreisrunden Ausnehmungen (32) der Trägerstege (21-24) frei zugänglich sind und durch welche die Ringdichtungen (38; 81) in axialer Richtung einbaubar sind.

8. Mehrwegeventil nach Anspruch 7, dadurch gekennzeichnet, daß der Dichtungstrager (15) einen quaderförmigen Grundkörper aufweist, dessen zu einer Montageflache (18) hin offener, trogförmiger Innenraum (17) durch die Trägerstege (21-24) in zur Montagefläche (18) hin offene, taschenförmige Ausnehmungen (26-30) unterteilt ist, in welche die Halterstege (43-47) beim Einbau des Dichtungshalters (15) kämmend mit den Trägerstegen (21-24) eingreifen.

9. Mehrwegeventil nach einem der Ansprüche 1 bis 8, dadurch gekennzeichnet, daß die Anschlüsse (36; 37; 54) im Dichtungsträger (15) und im Dichtungshalter (16) angeordnet und insbesondere für eine Rohranschluß-Bauweise ausgebildet sind.

10. Mehrwegeventil nach einem der Anspruche 1 bis 8, dadurch gekennzeichnet, daß die Anschlüsse (A, B, P, R) im Dichtungshalter (73) auf einer Seite angeordnet und insbesondere für eine Plattenanschluß-Bauweise ausgebildet sind.

11. Mehrwegeventil nach einem oder mehreren der Ansprüche 1 bis 10, dadurch gekennzeichnet, daß der Dichtungsträger (15, 72) und der Dichtungshalter (16, 73) aus Kunststoff bestehen.

12. Mehrwegeventil nach einem der Ansprüche 8 bis 11, dadurch gekennzeichnet, daß die taschenförmigen Ausnehmungen (26-30) zwischen den Trägerstegen (21-24) einen halbkreisförmigen Taschengrund aufweisen und die Halterstege (43-47) entsprechend halbkreisförmige Stegenden aufweisen, deren Radius dem halben Außendurchmesser der Ringdichtungen (38) entspricht.

13. Mehrwegeventil nach Anspruch 10, dadurch gekennzeichnet, daß es als 5/2-Wegeventil (70) ausgebildet ist, bei dem fünf Steuerkammern (91-95) durch sechs Ringdichtungen (81) abgedichtet werden, die von sieben Halterstegen (82-88) axial gehalten werden.

14. Mehrwegeventil nach Anspruch 9, dadurch gekennzeichnet, daß es als 3/2-Wegeventil (10) ausgebildet ist, dessen eine mittig liegende Steuerkammer (52) im Dichtungshalter (16) nach entgegengesetzten Seiten hin offen ist.

## Claims

1. Multiport valve, in particular for the control of pneumatic motors, having a longitudinally movable control slide (12; 74) which is arranged in a housing and, in particular by means of piston sections, controls the pressure medium connection between at least two adjacently located control chambers (51-53; 91-95) which are each connected to ports (36, 37, 54) and each of which is separated from one another in the axial direction by two sealing elements or are sealed off towards the outside, which sealing elements interact with the control slide which penetrates the control chambers and the sealing elements installed in the housing, characterized in that the sealing elements are designed as annular seals (38; 81), and the housing (11; 71) has a seal carrier (15; 72) and a seal holder (16; 73), of which the seal carrier (15, 72) has a plurality of carrier webs (21-24; 75-80) which start from a side extending parallel to the longitudinal axis, extend perpendicular to the control slide (12; 74) and surround the latter and are arranged in a comb-like manner and in the bores (32) of which the annular seals (38, 83) are installed in the longitudinal direction of the control slide (12; 74), in that the seal holder (16; 73) has holder webs (43-47; 82-88) which are likewise arranged on one side in a comb-like manner, extend perpendicular to the control slide (12; 74) and surround the latter, and in that the seal carrier (15; 72) and the seal holder (16; 73) are designed in such a way that they can be plugged together with mutually meshing webs (21-24; 43-47) in such a way that each annular seal (38; 81) which is fixed in the radial direction in a carrier web (21-24; 75-80) is held in the axial direction by holder webs (43-47; 82-88).

2. Multiport valve according to Claim 1, characterized in that the control chambers (51-53; 91-95) are formed in the holder webs (44-46; 83-87) of the seal holder (16; 73) and are open, in particular, towards one side of the seal holder (16; 73).

3. Multiport valve according to Claim 1 or 2, characterized in that each control chamber (51-53; 91-95) is sealed off towards the outside by a shaped seal (57; 98) arranged between the seal carrier (15; 72) and the seal holder (16; 73), the shaped seal (57; 98) being located with radial spacing from the control slide (12; 74) and surrounding each holder web (44-46) with the control chamber (51-53), engaging around it in an annular manner.

4. Multiport valve according to Claim 3, characterized in that the shaped seals (57; 98) for a plurality of control chambers (51-53; 91-95) are of integral design and are located in one sealing plane (25; 97).

5. Multiport valve according to one or more of Claims 1 to 4, characterized in that the annular seals (38; 81), viewed in the longitudinal direction of the control slide (12; 74), essentially have the same thickness as the carrier webs (21-24; 75-80) which accommodate them.

6. Multiport valve according to one of Claims 1 to 5, characterized in that all the annular seals (38; 81) have the same inside and the same outside diameter.

7. Multiport valve according to one of Claims 1 to 6, characterized in that the seal carrier (15; 72) has at least one end face (35) from which the circular cutouts (32) in the carrier webs (21-24) are freely accessible and through which the annular seals (38; 81) can be installed in the axial direction.

8. Multiport valve according to Claim 7, characterized in that the seal carrier (15) has a cuboid basic body, whose trough-shaped interior (17), which is open towards a mounting surface (18), is subdivided by the carrier webs (21-24) into pocket-like cutouts (26-30) which are open towards the mounting surface (18) and into which the holder webs (43-47) engage, meshing with the carrier webs (21-24) when the seal holder (15) is installed.

9. Multiport valve according to one of Claims 1 to 8, characterized in that the ports (36; 37; 54) are arranged in the seal carrier (15) and in the seal holder (16) and are designed, in particular, for pipe connection construction.

10. Multiport valve according to one of Claims 1 to 8, characterized in that the ports (A, B, P, R) in the seal holder (73) are arranged on one side and are designed, in particular, for plate connection construction.

11. Multiport valve according to one or more of Claims 1 to 10, characterized in that the seal carrier (15, 72) and the seal holder (16, 73) are made of plastic.

12. Multiport valve according to one of Claims 8 to 11, characterized in that the pocket-like cutouts (26-30) between the carrier webs (21-24) have a semicircular pocket base, and the holder webs (43-47) have correspondingly semicircular web ends whose radius corresponds to half the outside diameter of the annular seals (38).

13. Multiport valve according to Claim 10, characterized in that it is designed as a 5/2 way valve (70), in which five control chambers (91-95) are sealed off by six annular seals (81) which are held axially by seven holder webs (82-88).

14. Multiport valve according to Claim 9, characterized in that it is designed as a 3/2 way valve (10), whose one centrally located control chamber (52) in the seal holder (16) is open towards opposite sides.

## Revendications

1. Distributeur à plusieurs voies, en particulier pour la commande de moteurs pneumatiques, avec un tiroir de commande (12, 74), disposé dans un boîtier qui se déplace longitudinalement et qui commande, en particulier au moyen de sections du piston, la liaison du fluide sous pression entre au moins deux chambres de commande (51-53; 91-95), disposées à côté l'une de l'autre qui sont respectivement reliées à des raccords (36, 37, 54) et dont chacune est séparée de l'autre dans le sens axial ou est rendue étanche en direction de l'extérieur par deux éléments d'étanchéité qui coopèrent avec le tiroir de commande qui passe à travers les chambres de commande et les éléments d'étanchéité montés dans le boîtier,
caractérisé en ce que
• les éléments d'étanchéité sont constitués sous la forme de joints d'étanchéité annulaires (38; 81) et le boîtier (11; 71) présente un support de joints d'étanchéité (15; 72) et un dispositif de maintien de joints d'étanchéité (16; 73), le support de joints d'étanchéité (15; 72) présentant plusieurs entretoises de support (21; 24; 75; 80) partant d'un côté qui s'étend parallèlement à l'axe longitudinal, s'étendant perpendiculairement au tiroir de commande (12; 74) et entourant celui-ci en le serrant, entretoises qui sont disposées à la manière de peignes, et dans les alésages (32) desquels sont montés les joints d'étanchéité annulaires (38, 83) dans le sens longitudinal du tiroir de commande (12; 74),
• le dispositif de maintien des joints d'étanchéité (16; 73) présente également des entretoises de maintien (43-47; 82-88) en forme de peigne disposées sur un côté qui s'étend perpendiculairement au tiroir de commande (12; 74) et entoure celui-ci en le serrant et
• le support de joints d'étanchéité (15; 72) et le maintien de joints d'étanchéité (16; 73) sont constitués de telle façon qu'ils peuvent être enfoncés ensemble avec des entretoises (21-24; 43-47) pénétrant les unes dans les autres à la manière de peignes, de telle manière que chaque joint d'étanchéité annulaire (38-81), fixé dans une entretoise de support (21-24; 75-80) dans le sens radial soit maintenu par des entretoises du dispositif de maintien (43-47; 82-88).

2. Distributeur à plusieurs voies selon la revendication 1,
caractérisé en ce que
les chambres de commande (51-53; 91-95) sont constituées dans les entretoises de maintien (44-46; 83-87) du maintien des joints d'étanchéité (16; 73) et sont en particulier ouvertes en direction d'un côté du maintien des joints d'étanchéité (16; 73).

3. Distributeur à plusieurs voies selon la revendication 1 ou 2,
caractérisé en ce que
chaque chambre de commande (51-53; 91-95) est rendue étanche par un joint d'étanchéité moulé (57; 98), disposé entre le support des joints d'étanchéité (15; 72) et le dispositif de maintien des joints d'étanchéité (16; 73), en direction de l'extérieur, le joint d'étanchéité moulé (57; 98) se trouvant à une certaine distance radiale du tiroir de commande (12; 74) et entourant en forme d'anneau en la serrant chaque entretoise de maintien (44-46) par la chambre de commande (51-53).

4. Distributeur à plusieurs voies selon la revendication 3,
caractérisé en ce que
les joints d'étanchéité moulés (57; 98) sont constitués d'une seule pièce pour plusieurs chambres de commande (51-53; 91-95) et se trouvent dans un plan de joints (25; 97).

5. Distributeur à plusieurs voies selon une ou plusieurs des revendications 1 à 4,
caractérisé en ce que
les joints d'étanchéité annulaires (38; 81) ont, vus dans le sens longitudinal du tiroir de commande (12; 74), sensiblement la même épaisseur que les entretoises de support (21-24; 75-80) qui les reçoivent.

6. Distributeur à plusieurs voies selon l'une des revendications 1 à 5,
caractérisé en ce que
tous les joints d'étanchéité annulaires (38; 81) présentent les mêmes diamètres intérieurs et extérieurs.

7. Distributeur à plusieurs voies selon l'une des revendications 1 à 6,
caractérisé en ce que
le support des joints d'étanchéité (15; 72) présente au moins une face frontale (35) à partir de laquelle les évidements circulaires (32) des entretoises de support (21-24) sont librement accessibles et grâce à laquelle on peut monter les joints d'étanchéité annulaires (38; 81) dans le sens axial.

8. Distributeur à plusieurs voies selon la revendication 7
caractérisé en ce que
le support des joints d'étanchéité (15) présente un corps de base de forme rectangulaire, dont l'intérieur (17), en forme d'auge, ouvert en direction d'une surface de montage (18), est subdivisé par les entretoises de support (21-24) en des évidements (26-30) en forme de poches, ouverts en direction de la surface de montage (18), évidements dans lesquels les entretoises de maintien (43-47) viennent en prise avec les entretoises de support (21-24) à la manière de peignes lors du montage du dispositif de maintien des joints d'étanchéité (15).

9. Distributeur à plusieurs voies selon l'une des revendications 1 à 8,
caractérisé en ce que
les raccords (36; 37; 54) sont disposés dans le support des joints d'étanchéité (15) et dans le dispositif de maintien des joints d'étanchéité (16) et sont en particulier constitués pour un mode de construction à raccordements tubulaires.

10. Distributeur à plusieurs voies selon l'une des revendications 1 à 8,
caractérisé en ce que
les raccords ( A, B, P, R) sont disposés dans le dispositif de maintien des joints d'étanchéité (73) d'un seul côté et en particulier sont constitués pour avoir un mode de construction à raccordement par plaque.

11. Distributeur à plusieurs voies selon une ou plusieurs des revendications 1 à 10,
caractérisé en ce que
le support des joints d'étanchéité (15, 72) et le dispositif de maintien des joints d'étanchéité (16, 73) sont réalisés en matière plastique.

12. Distributeur à plusieurs voies selon l'une des revendications 8 à 11,
caractérisé en ce que
les évidements en forme de poche (26-30) présentent entre les entretoises de support (21-24) un fond de poche de forme semi-circulaire et les entretoises de maintien (43-47) présentent des extrémités ayant de façon correspondante une forme semi-circulaire, dont le rayon correspond à la moitié du diamètre extérieur des joints d'étanchéité annulaires (38).

13. Distributeur à plusieurs voies selon la revendication 10,
caractérisé en ce qu'
il est constitué sous la forme d'un distributeur à 5/2 voies (70), dans lequel on assure l'étanchéité de cinq chambres de commande (91-95) par six joints d'étanchéité annulaires (81) qui sont maintenus axialement par sept entretoises de maintien (82-88).

14. Distributeur à plusieurs voies selon la revendication 9,
caractérisé en ce qu'
il est constitué sous la forme d'un distributeur à 3/2 voies (10), dont une chambre de commande (52) qui se trouve au centre, est ouverte en direction des faces opposées dans le dispositif de maintien des joints d'étanchéité (16).
